# EUROPEAN PATENT SPECIFICATION

(11) **EP 2 875 710 B1**
(45) Date of publication and mention of the grant of the patent: **19.10.2016**
(21) Application number: 13193814.4
(22) Date of filing: 21.11.2013
(51) Int. Cl.: A01D 34/74

(54) **Lawnmower height-of-cut adjustment system**
Rasenmäher-Schnitthöhen-Einstellsystem
Système de réglage de hauteur de coupe de tondeuse à gazon

(43) Date of publication of application: 27.05.2015
(73) Proprietor: ROBERT BOSCH GMBH, 70442 Stuttgart (DE)
(72) Inventor: Quigley, Andrew, Matlock, Derbyshire DE4 4LS (GB); Ling, Matthew, Ipswich, Suffolk IP6 8QR (GB)

(56) References cited:
- WO-A1-2007/019726
- DE-C1- 3 627 208
- US-A- 2 568 822
- US-A- 2 948 544
- US-A- 4 785 612

## Description

The present invention relates to a lawnmower and more particularly to a lawnmower height-of-cut adjustment system.

Various mechanisms for adjusting the cutting height of lawnmowers are known. However, there is still a need for an adjustment system which is mechanically durable, resilient and intuitive to use. This particularly applies to products aimed at the professional market, where reliability and durability are important requirements.

US-A-4785612 (Morishita et al.) discloses a walk-behind lawnmower having a chassis height adjustment mechanism with the features of the preamble of claim 1.

In accordance with the invention, there is provided a lawnmower comprising a chassis including a cutting deck, a pair of front wheels and a pair of rear wheels each respectively mounted on front and rear axle assemblies which are able to rotate about a pivot point on the chassis to raise or lower the chassis relative to the wheels, and a cutting height adjustment mechanism, wherein the adjustment mechanism comprises an adjustment lever mounted on the chassis and configured to rotate about a pivot point relative to the chassis, and front and rear linkages connected between the adjustment lever and respective front and rear axle assemblies such that, when the adjustment lever is rotated about its pivot point, the front and rear linkages cause the axle assemblies to rotate and raise or lower the chassis relative to the wheels, the adjustment lever thereby adjusting the height of the chassis relative to all four wheels simultaneously, characterised in that the adjustment lever is configured such that the chassis height is raised by upward movement of the lever relative to the chassis and lowered by downward movement of the lever relative to the chassis.

A particularly preferred feature of the invention is the provision of a spring configured to provide a biasing force against the weight of the chassis. Preferably, the spring acts between the chassis and one of the axle assemblies or linkages, urging the axle assembly towards the raised position. The spring may be any suitable type for the application, such as torsion, compression or tension. A compression spring has been found to work well. The linkages may be in the form of rods or shafts. A preferred arrangement is one in which the spring is a coil spring and is configured such that one of the linkages passes through the middle of the coil spring. This is a neat arrangement and makes the adjustment mechanism more compact. The spring may act directly on the chassis, or a contact plate or surface may be provided. A plate or contact surface for the spring may be provided at the other end of the spring, and this could be either on the linkage or on part of the axle assembly. Preferably, the spring acts on the rear linkage or rear axle assembly.

The adjustment lever preferably includes a locking mechanism to hold the lever in a desired position and maintain the position of the chassis relative to the wheels, and thereby maintain the cutting height. The locking mechanism may comprise a movable locking pin and a plurality of recesses with which the pin can selectively engage to lock the adjustment lever in position. The adjustment lever may include a spring-loaded button which releases the pin from engagement with the relevant recess and allows movement of the lever.

In a preferred embodiment, the axis of rotation of the adjustment lever extends substantially in the transverse direction of the lawnmower.

In a preferred arrangement for the adjustment mechanism, rotation of the adjustment lever causes axial movement of the front and rear linkages. Preferably, rotation of the adjustment lever causes either both front and rear linkages to push or both front and rear linkages to pull their respective axle assemblies and cause rotation thereof.

The adjustment lever may comprise a grip portion extending from a base portion, the pivot point being located on the base portion. The spring-loaded release button referred to above may conveniently be provided on the grip portion, for example at the end thereof, which can be operated by the user's thumb. In this way, the adjustment lever may resemble a vehicle handbrake lever. The adjustment lever may be substantially horizontal at the lowest chassis position.

The front and rear linkages are preferably pivotally attached to the adjustment lever, e.g. to the base portion. They are preferably attached at points on opposite sides of the adjustment lever pivot point.

A further particularly preferred feature of the present invention is the provision of one or more resilient bushes in at least one of the front and rear axle assemblies. This will reduce the transmission of shock forces from the wheels to the chassis. This is of particular benefit in products aimed at the professional market, where products need to be more durable to meet the demands of the professional user. For example, professional lawnmowers are typically carried on trailers or in trucks or vans, and they may be dropped from a height during unloading or loading (either inadvertently or deliberately). The provision of one or more resilient bushes will lessen the shock transmitted to the chassis in this event, and will therefore help to increase the life of the lawnmower and its components, reducing the need for repair or replacement.

The resilient bushes may be provided at one or both of the front and rear axle assemblies. Preferably the or each bush is provided at the point or points where the axle assembly mounts to the chassis. Conveniently, the resilient bush forms the axle assembly pivot point on the chassis.

In at least its preferred embodiments, the present invention provides a durable cutting height adjustment mechanism which is mechanically straightforward and intuitive to use. The adjustment mechanism is a central adjustment system which controls all four wheels simultaneously, as opposed to the individual wheel or axle adjustment systems provided on many lawnmowers on the market. The central system ensures that all four wheels are set to the same height and it is very quick and easy to use.

An embodiment of the invention will now be described by way of example only and with reference to the accompanying drawings, in which:
Fig. 1 shows a perspective view of a lawnmower in accordance with the invention, with some components removed for clarity;
Fig. 2 shows a further prospective view, with the lawnmower chassis removed so that the majority of the adjustment mechanism can be seen in full;
Fig. 3 shows a side elevation of a cutting height adjustment mechanism in accordance with the invention;
Figs. 4A and 4B show a side elevation in partial cross-section, with the chassis spring in more detail; and
Fig. 5 shows a resilient bush at the front axle mounting/pivot point.

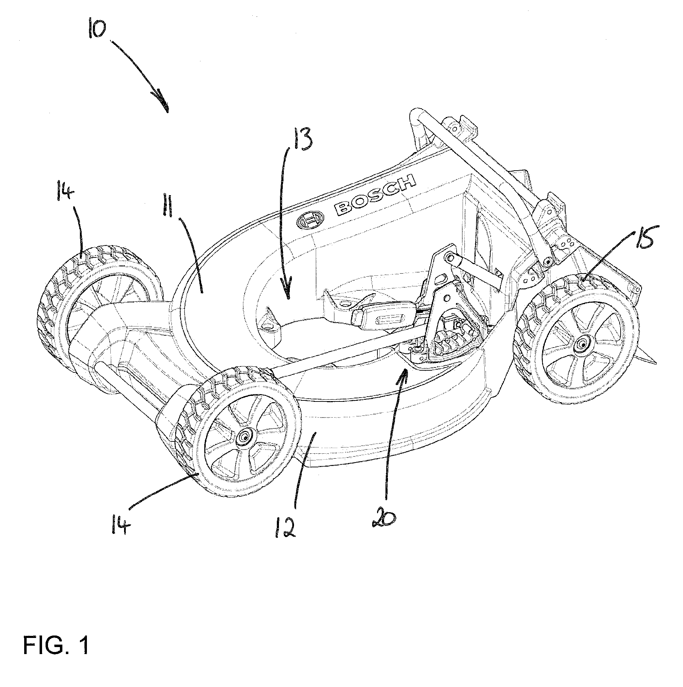

With reference to Fig. 1, the lawnmower 10 comprises a chassis 11 which defines a cutting chamber 12. An electric motor (not shown) is mounted in the central aperture 13 of the chassis. A cutting blade (also not shown) is attached to the motor for rotation within the cutting chamber 12. Front wheels 14 and rear wheels 15 are provided at respective corners of the chassis.

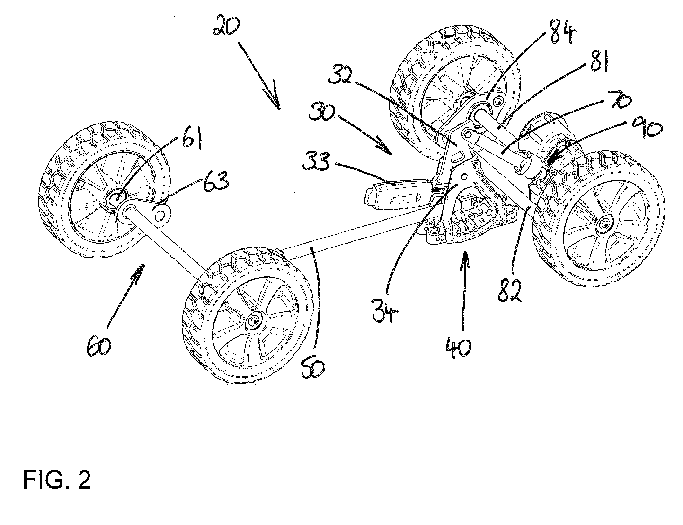

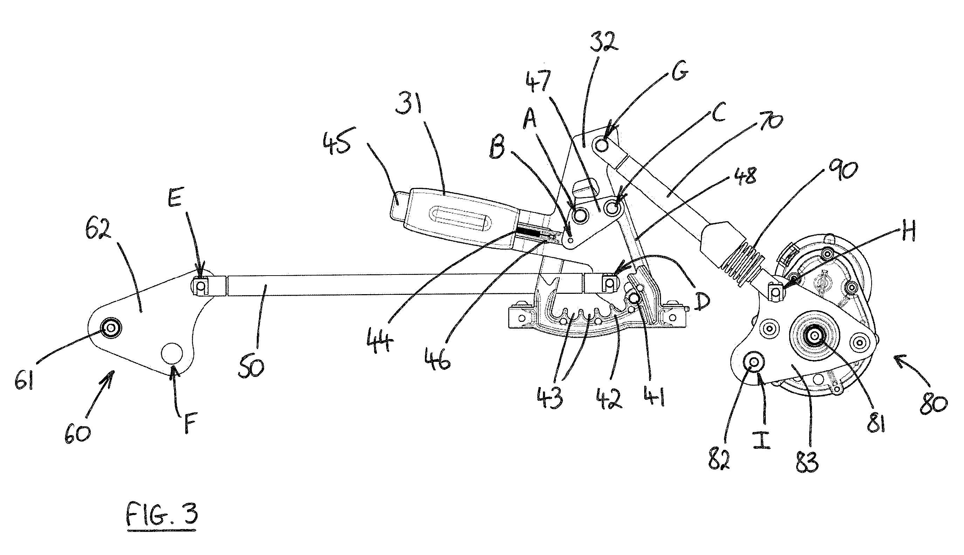

The cutting height adjustment mechanism is shown generally as 20 and is best understood with reference to Figs. 2 and 3.

In general terms, adjustment mechanism 20 comprises adjustment lever 30, locking mechanism 40, front linkage 50, front axle assembly 60, rear linkage 70, rear axle assembly 80 and support spring 90.

Adjustment lever 30 comprises a grip portion 31 and a base portion 32. The lever 30, and particularly base portion 32, is generally made from a flat plate, and is configured to pivot about point A. A handgrip 33 (Fig. 1) may also be provided. The adjustment lever 30 is supported by two pivot brackets 34.

The locking mechanism 40 for the adjustment lever 30 comprises a pin 41 which is able to locate in a series of recesses 42 in a rack 43. Rack 43 is formed at the base of one of the pivot brackets 34. The pin is biased towards the locked (downward) position by means of spring 44 and is lifted from engagement with the relevant recess by means of a button 45 provided at the end of the grip portion 31 of the adjustment lever. Button 45 is connected to operating rod 46 which is pivotally connected to quadrant plate 47 at point B. When the button 45 is depressed against the biasing force of spring 44, plate 47 pivots about point A relative to adjustment lever 30 in an anti-clockwise direction in Fig. 3. This causes slider 48, which is pivotally attached to plate 47 at point C, to raise and, since it is connected directly to pin 41, pin 41 is lifted in a generally radial direction relative to pivot point A. Adjustment lever 30 can then be moved to the desired setting and the button 45 released so that pin 41 engages the appropriate recess 43.

Front linkage 50 is pivotally attached at point D to the lower part of base portion 32 of the adjustment lever 30. The other end is pivotally attached at point E to part of the front axle assembly 60.

Front axle assembly 60 comprises an axle 61, linkage connecting plate 62 and a pair of chassis connecting plates 63. Linkage connecting plate 62 may be formed separately from the chassis connecting plates 63 or may be formed integrally with one of them. In either arrangement, linkage connecting plate 62 is rotationally fixed to chassis connecting plates 63. This may be achieved by fixing the plates to axle 61 on the ends of which the front wheels 14 rotate.

The chassis connecting plates 63 are pivotally attached to the chassis 11 at pivot point F. Resilient bushes may be provided at this point, as discussed below.

It can therefore be understood that, when adjustment lever 30 is rotated about point A, front linkage 50 moves generally along its axis in a forward or rearward direction. This pushes or pulls connecting plates 62 and 63 and causes them to rotate together about pivot point F, thereby causing axle 61 to lower or raise relative to point F and relative to the chassis 11.

Rear linkage 70 is pivotally attached at point G to the upper part of base portion 32 of the adjustment lever 30. The other end is pivotally attached at point H to part of the rear axle assembly 80.

Rear axle assembly 80 comprises axle 81, cross bar 82, linkage connecting plate 83 and chassis connecting plate 84 (Fig. 2). Linkage connecting plate 83 and chassis connecting plate 84 are rigidly mounted to cross bar 82 which is pivotally attached to the chassis 11 at pivot point I (Fig. 3). Conveniently this point is coaxial with cross bar 82. Resilient bushes may be provided at this point, as discussed below. Bearings are mounted to linkage connecting plate 83 and chassis connecting plate 84 through which axle 81 is located and on which the rear wheels 15 are also located.

It can therefore be understood that, when adjustment lever 30 is rotated about point A, rear linkage 70 moves generally along its axis. This pushes or pulls connecting plates 82 and 83 to cause them to rotate together about pivot point I, thereby causing axle 81 to lower or raise relative to point I and relative to the chassis 11.

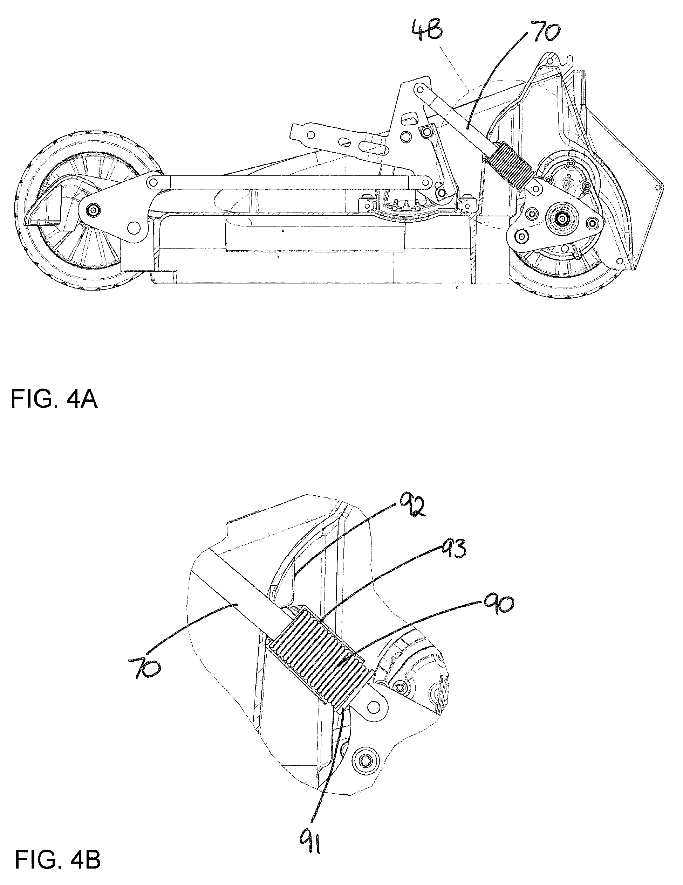

Turning to Figs. 4A and 4B, support spring 90 is shown in more detail. Support spring 90 is a compression coil spring and is therefore shown in its most compressed state in the drawings. Support spring 90 is mounted around rear linkage 70, so rear linkage 70 is inserted through the centre aperture of the coil spring. With reference to Fig. 4B, support spring 90 provides a force against the chassis 11 in one direction and against the rear linkage 70 in the other direction. This provides a force which tends to push the two components apart, which in effect supports at least part of the weight of the chassis.

When the adjustment mechanism is released therefore, the full weight of the chassis does not have to be supported through the adjustment lever during adjustment of the cutting height. The spring force can be tuned to so that when the mechanism is released, the chassis neither falls straight to the ground nor jumps to its maximum height - i.e. it is neutrally balanced.

A plate 91 is provided on rear linkage 70 and a suitable angled surface 92 is provided on the underside of chassis 90 so that both ends of the spring 90 can remain substantially orthogonal to its axis. This ensures that the force of the spring is applied substantially along its axis.

In order to prevent the spring curving in its axial direction (also known as "snaking), a cylindrical spring cover 93 is provided.

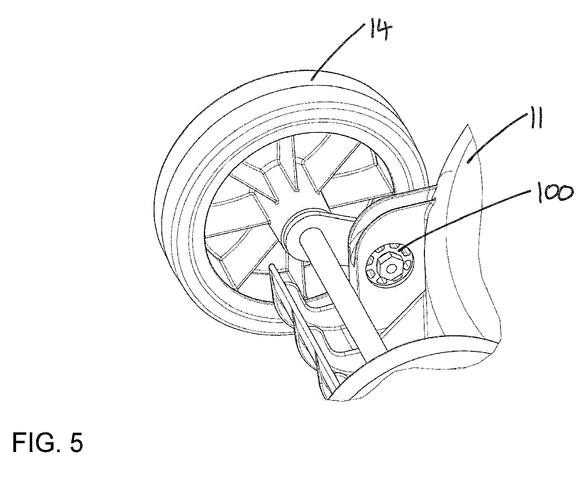

Fig. 5 shows a detailed view of a resilient support bush 100, which is located at pivot point F of the front axle assembly 60 and pivotally connects chassis connecting plate 83 to chassis 11. Resilient support bushes may also be provided at pivot point I of the rear axle assembly 80. In addition or alternatively, resilient bushes may be mounted at any of the other pivot points and also used to mount one or both axles 61 and 81 in their respective axle assemblies. With appropriate selection of bush hardness, the instantaneous shock load from a 1 meter drop test can be reduced from 220G to 55G. This level of shock has shown to be a sustainable level for the product's electronics to survive.

It is especially preferable that front linkage connecting plate 62, front linkage 50, adjustment lever base portion 32, rear linkage 70 and rear linkage connecting plate 83 are all located in the same vertical plane aligned perpendicularly to the front and rear axle pivot axes (points F and I in Fig. 3). Similarly preferable is that front linkage 50 and rear linkage 70 are not curved in any way but form a straight connection between their respective end pivot points. These features provide a strong mechanism which can survive the forces experienced if the lawnmower is dropped by avoiding any side loading which could cause buckling or bending of components.

## Claims

1. A lawnmower (10) comprising a chassis (11) including a cutting deck (12), a pair of front wheels (14) and a pair of rear wheels (15) each respectively mounted on front and rear axle assemblies (60, 80) which are able to rotate about a pivot point (F, I) on the chassis to raise or lower the chassis relative to the wheels, and a cutting height adjustment mechanism (20), wherein the adjustment mechanism comprises an adjustment lever (30) mounted on the chassis and configured to rotate about a pivot point (A) relative to the chassis, and front and rear linkages (50, 70) connected between the adjustment lever (30) and respective front and rear axle assemblies (60, 80) such that, when the adjustment lever is rotated about its pivot point (A), the front and rear linkages (50, 70) cause the axle assemblies to rotate and raise or lower the chassis (11) relative to the wheels (14, 15), the adjustment lever thereby adjusting the height of the chassis relative to all four wheels simultaneously, **characterised in that** the adjustment lever (30) is configured such that the chassis height is raised by upward movement of the lever relative to the chassis and lowered by downward movement of the lever relative to the chassis.

2. The lawnmower of claim 1, further comprising a spring (90) configured to provide a biasing force against the weight of the chassis.

3. The lawnmower of claim 2, in which the spring (90) acts between the chassis (11) and one of the axle assemblies (60, 80) or linkages (50, 70), urging the axle assembly towards the raised position.

4. The lawnmower of claim 3, in which the spring (90) is a coil spring and is configured such that one of the linkages (50, 70) passes through the middle of the coil spring.

5. The lawnmower of any preceding claim, in which the adjustment lever (30) includes a locking mechanism (40) to hold the lever in a desired position and maintain the position of the chassis relative to the wheels.

6. The lawnmower of claim 5, in which the locking mechanism (40) comprises a movable locking pin (41) and a plurality of recesses (42) with which the pin may engage to lock the adjustment lever (30) in position.

7. The lawnmower of claim 6, in which the adjustment lever (30) includes a spring-loaded button (45) which releases the pin (41) from engagement with the relevant recess (42) and allows movement of the lever.

8. The lawnmower of any preceding claim, in which the axis of rotation of the adjustment lever (30) extends substantially in the transverse direction of the lawnmower.

9. The lawnmower of any preceding claim, in which rotation of the adjustment lever (30) causes axial movement of the front and rear linkages (50, 70).

10. The lawnmower of any preceding claim, in which rotation of the adjustment lever (30) causes either both front and rear linkages (50, 70) to push or both front and rear linkages (50, 70) to pull their respective axle assemblies (60, 80) and cause rotation thereof.

11. The lawnmower of any preceding claim, in which the adjustment lever (30) is substantially horizontal at the lowest chassis position.

12. The lawnmower of any preceding claim, in which at least one of the front and rear axle assemblies (60, 80) includes one or more resilient bushes (100) to reduce the transmission of shock forces from the wheels to the chassis.

13. The lawnmower of claim 12, in which the at least one axle assembly (60, 80) is mounted to the chassis at the pivot point (F, I) by means of a resilient bush (100).

14. The lawnmower of any preceding claim, in which the front and rear linkages (50, 70) lie in the same vertical plane.

## Patentansprüche

1. Rasenmäher (10) mit einem Fahrgestell (11), aufweisend: ein Schneidgehäuse (12), ein Paar Vorderräder (14) und ein Paar Hinterräder (15), die jeweils an vorderen und hinteren Achsenanordnungen (60, 80) montiert sind, die sich um einen Drehpunkt (F, I) am Fahrgestell drehen können, um das Fahrgestell in Bezug auf die Räder anzuheben oder abzusenken, einen Schneidhöhen-Einstellmechanismus (20), wobei der Einstellmechanismus einen Einstellhebel (30) umfasst, der am Fahrgestell montiert ist und zum Drehen um einen Drehpunkt (A) in Bezug auf das Fahrgestell konfiguriert ist, und vordere und hintere Lenkgestänge (50, 70), die zwischen dem Einstellhebel (30) und den zugehörigen vorderen und hinteren Achsenanordnungen (60, 80) verbunden sind, sodass, wenn der Einstellhebel um seinen Drehpunkt (A) gedreht wird, die vorderen und hinteren Lenkgestänge (50, 70) bewirken, dass sich die Achsenanordnungen drehen und das Fahrgestell (11) in Bezug auf die Räder (14, 15) anheben oder absenken, wodurch der Einstellhebel die Höhe des Fahrgestells in Bezug auf alle vier Räder gleichzeitig einstellt, **dadurch gekennzeichnet, dass** der Einstellhebel (30) derart konfiguriert ist, dass die Fahrgestellhöhe durch eine Aufwärtsbewegung des Hebels in Bezug auf das Fahrgestell angehoben wird und durch eine Abwärtsbewegung des Hebels in Bezug auf das Fahrgestell abgesenkt wird.

2. Rasenmäher nach Anspruch 1, ferner umfassend eine Feder (90), die zum Bereitstellen einer Vorspannkraft gegen das Gewicht des Fahrgestells konfiguriert ist.

3. Rasenmäher nach Anspruch 2, wobei die Feder (90) zwischen dem Fahrgestell (11) und entweder den Achsanordnungen (60, 80) oder den Lenkgestängen (50, 70) wirkt, indem sie die Achsenanordnung zur angehobenen Position drückt.

4. Rasenmäher nach Anspruch 3, wobei die Feder (90) eine Schraubenfeder ist und so konfiguriert ist, dass eines der Lenkgestänge (50, 70) durch die Mitte der Schraubenfeder verläuft.

5. Rasenmäher nach einem der vorhergehenden Ansprüche, wobei der Einstellhebel (30) einen Verriegelungsmechanismus (40) zum Halten des Hebels an einer gewünschten Position und zum Beibehalten der Position des Fahrgestells in Bezug auf die Räder aufweist.

6. Rasenmäher nach Anspruch 5, wobei der Verriegelungsmechanismus (40) einen beweglichen Sperrstift (41) und eine Vielzahl von Aussparungen (42) umfasst, in die der Stift eingreifen kann, um den Einstellhebel (30) in seiner Position zu verriegeln.

7. Rasenmäher nach Anspruch 6, wobei der Einstellhebel (30) einen federbelasteten Taster (45) aufweist, der den Stift (41) aus dem Eingriff und der relevanten Aussparung (42) freigibt und die Bewegung des Hebels ermöglicht.

8. Rasenmäher nach einem der vorhergehenden Ansprüche, wobei sich die Drehachse des Einstellhebels (30) im Wesentlichen in Querrichtung des Rasenmähers erstreckt.

9. Rasenmäher nach einem der vorhergehenden Ansprüche, wobei die Drehung des Einstellhebels (30) eine axiale Bewegung der vorderen und hinteren Lenkgestänge (50, 70) bewirkt.

10. Rasenmäher nach einem der vorhergehenden Ansprüche, wobei die Drehung des Einstellhebels (30) bewirkt, dass das vordere und hintere Lenkgestänge (50, 70) die zugehörigen Achsenanordnungen (60, 80) entweder drücken oder das vordere und hintere Lenkgestänge (50, 70) die zugehörigen Achsenanordnungen (60, 80) ziehen und die Drehung davon bewirken.

11. Rasenmäher nach einem der vorhergehenden Ansprüche, wobei der Einstellhebel (30) im Wesentlichen horizontal in der niedrigsten Fahrgestellposition ist.

12. Rasenmäher nach einem der vorhergehenden Ansprüche, wobei mindestens eine der vorderen und hinteren Radachsenanordnungen (60, 80) eine oder mehrere elastische Buchsen (100) aufweist, um die Übertragung von Stoßkräften von den Rädern aufs Fahrgestell zu reduzieren.

13. Rasenmäher nach Anspruch 12, wobei die mindestens eine Achsenanordnung (60, 80) mittels einer elastischen Buchse (100) am Drehpunkt (F, I) am Fahrgestell montiert ist.

14. Rasenmäher nach einem der vorhergehenden Ansprüche, wobei die vorderen und hinteren Lenkgestänge (50, 70) auf der gleichen vertikalen Ebene liegen.

## Revendications

1. Tondeuse à gazon (10) comprenant un châssis (11) comprenant une plate-forme de coupe (12), une paire de roues avant (14) et une paire de roues arrière (15), chacune montée respectivement sur des ensembles essieu avant et arrière (60, 80), qui sont capables de tourner autour d'un point de pivot (F, I) sur le châssis pour soulever ou abaisser le châssis par rapport aux roues, et un mécanisme de réglage (20) de la hauteur de coupe, dans laquelle le mécanisme de réglage comprend un levier de réglage (30) monté sur le châssis et configuré pour tourner par rapport au châssis autour d'un point de pivot (A) et des tringleries avant et arrière (50, 70) raccordant le levier de réglage (30) à respectivement les ensembles essieu avant et arrière (60, 80) de telle sorte que, quand on fait tourner le levier de réglage autour de son point de pivot (A), les tringleries avant et arrière (50, 70) font tourner les ensembles essieu et soulèvent ou abaissent le châssis (11) par rapport aux roues (14, 15), le levier de réglage réglant de ce fait simultanément la hauteur du châssis par rapport à l'ensemble des quatre roues,
**caractérisée en ce que** le levier de réglage (30) est configuré de telle sorte que la hauteur du châssis est augmentée par le mouvement ascendant du levier par rapport au châssis et diminuée par le déplacement descendant du levier par rapport au châssis.

2. Tondeuse à gazon selon la revendication 1, comprenant en outre un ressort (90) configuré pour fournir une force de sollicitation contre le poids du châssis.

3. Tondeuse à gazon selon la revendication 2, dans laquelle le ressort (90) agit entre le châssis (11) et l'un des ensembles essieu (60, 80) ou des tringleries (50, 70), en poussant l'ensemble essieu vers la position soulevée.

4. Tondeuse à gazon selon la revendication 3, dans laquelle le ressort (90) est un ressort hélicoïdal et est configuré de telle sorte que l'une des tringleries (50, 70) passe à travers le centre du ressort hélicoïdal.

5. Tondeuse à gazon selon l'une quelconque des revendications précédentes, dans laquelle le levier de réglage (30) comprend un mécanisme de blocage (40) pour maintenir le levier dans la position souhaitée et de conserver la position du châssis par rapport aux roues.

6. Tondeuse à gazon selon la revendication 5, dans laquelle le mécanisme de blocage (40) comprend une goupille d'arrêt (41) mobile et une pluralité d'évidements (42) dans lesquels la goupille peut s'engager pour bloquer le levier de réglage (30) en position.

7. Tondeuse à gazon selon la revendication 6, dans laquelle le levier de réglage (30) comprend un bouton (45) à ressort qui libère la goupille (41) de son engrènement avec l'évidement (42) correspondant et permet le mouvement du levier.

8. Tondeuse à gazon selon l'une quelconque des revendications précédentes, dans laquelle l'axe de rotation du levier de réglage (30) s'étend sensiblement dans la direction transversale de la tondeuse à gazon.

9. Tondeuse à gazon selon l'une quelconque des revendications précédentes, dans laquelle la rotation du levier de réglage (30) provoque un déplacement axial des tringleries avant et arrière (50, 70).

10. Tondeuse à gazon selon l'une quelconque des revendications précédentes, dans laquelle la rotation du levier de réglage (30) fait en sorte que les deux tringleries avant et arrière (50, 70) soit poussent soit tirent leur ensemble essieu (60, 80) respectif et provoquent leur rotation.

11. Tondeuse à gazon selon l'une quelconque des revendications précédentes, dans laquelle le levier de réglage (30) est sensiblement horizontal quand la position du châssis est la plus basse.

12. Tondeuse à gazon selon l'une quelconque des revendications précédentes, dans laquelle au moins un des ensembles essieu avant et arrière (60, 80) comprend une ou plusieurs douilles élastiques (100) pour réduire la transmission de forces de choc des roues vers le châssis.

13. Tondeuse à gazon selon la revendication 12, dans laquelle l'au moins un ensemble essieu (60, 80) est monté sur le châssis au niveau du point de pivot (F, I) au moyen d'une douille élastique (100).

14. Tondeuse à gazon selon l'une quelconque des revendications précédentes, dans laquelle les tringleries avant et arrière (50, 70) se trouvent dans le même plan vertical.
